# NOUVEAU FASCICULE DE BREVET EUROPEEN

(11) **EP 0 743 877 B2**
(45) Date de publication et mention de la décision concernant l'opposition: **12.01.2005**
(45) Mention de la délivrance du brevet: 19.08.1998
(21) Numéro de dépôt: 95942227.0
(22) Date de dépôt: 07.12.1995
(51) Int. Cl.: B01J 8/02, B01J 8/00, B01D 53/04

(54) **INSTALLATION DE TRAITEMENT D'AU MOINS UN FLUIDE, APPLICATIONS AU TRAITEMENT D'UN FLUX D'AIR ET PROCEDE DE CHARGEMENT DE MASSES DE MATERIAUX PARTICULAIRES DANS UNE TELLE INSTALLATION**
VORRICHTUNG ZUR BEHANDLUNG VON MINDESTENS EINEM FLUID, ANWENDUNG ZUR BEHANDLUNG VON EINEM LUFTSTROM UND VERFAHREN ZUR FÜLLUNG VON EINER DERARTIGEN VORRICHTUNG MIT EINER MASSE VON KÖRNIGEM MATERIAL
APPARATUS FOR PROCESSING AT LEAST ONE FLUID, USE THEREOF FOR PROCESSING AN AIR FLOW, AND METHOD FOR LOADING MASSES OF PARTICULATE MATERIAL INTO SAID APPARATUS

(30) Priorité: 09.12.1994 FR 9414825
(43) Date de publication de la demande: 27.11.1996
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: LEHMAN, Jean-Yves, F-94700 Maisons-Alfort (FR)
(74) Mandataire: Le Moenner, Gabriel
(86) Numéro de dépôt international: PCT/FR1995/001626
(87) Numéro de publication internationale: WO 1996/017678

(56) Documents cités:
- EP-A- 0 118 349
- EP-A- 0 482 991
- EP-A- 0 483 975
- EP-A- 0 596 256
- GB-A- 2 168 330
- JP-A- 5 228 356
- US-A- 4 541 851
- US-A- 5 176 721
- PATENT ABSTRACTS OF JAPAN vol. 17 no. 685 (C-1142) ,15 Décembre 1993 & JP,A,05 228356 (SOFUTAADE KOGYO K.K.) 7 Septembre 1993,
- "Adsorption Purification for Air Separation Units", M. Grenier et al., Intersociety Cyrogenics Symposium, Winter Annual Meeting of ASMI, Dec. 9-14, 1984, New Orleans, LA, U.S.A.

## Description

La présente invention concerne les installations de traitement d'au moins un fluide, du type comprenant au moins un récipient définissant au moins une portion de trajet de fluide non verticale au travers d'au moins deux masses adjacentes de matériaux particulaires ou granulaires avec entre elles une zone d'interface sensiblement verticale.

Des installations de ce type trouvent de larges applications dans la technique avec des matériaux particulaires ou granulaires tels que des catalyseurs et/ou des adsorbants. Dans la majeure partie de ces applications, l'obtention de performances optimales est conditionnéé par la constance de l'épaisseur de chaque masse de matériau dans le sens d'écoulement -horizontal- du fluide. Jusqu'à présent, dans les installations de grandes dimensions et en particulier du type à masses de matériaux concentriques, cette précision imposait, comme décrit dans le document EP-A-0.118.349, la mise en place, délicate et onéreuse, d'une grille intermédiaire, qui s'avère d'autre part gêner gravement l'accès à l'intérieur des lits, notamment en cas de réparations. Pour les installations de faibles dimensions, un procédé de déposes successives de masses de matériaux dans un récipient couché à plat avec mise en compression des masses déposées et redressement en position verticale est décrit dans le document EP-A-0.480.797. Cette dernière approche ne peut toutefois être industriellement retenue pour des installations de grandes dimensions, où le retournement sur site est difficile sinon impossible, ni pour celles mettant en oeuvre des lits "minces" de matériaux, ni, non plus, pour les installations à lits non plans, typiquement à axe de symétrie et/ou de révolution. De plus, dans de nombreux pays, les réglementations imposent d'effectuer régulièrement une ré-épreuve hydraulique de mise sous pression du récipient qui impose une vidange complète puis un re-remplissage sur site du récipient.

La présente invention a pour objet de proposer une installation de traitement de fluide, à lits disposés en série, perfectionnée et fiable, de faibles coûts, permettant de nombreuses adaptations et offrant de nombreusés possibilités d'optimisation, et notamment de multiplier le nombre de lits adjacents, tout en garantissant, pour l'aspect "fiabilité", que chaque lit soit exempt de granules ou de particules destinés à la réalisation d'un lit voisin.

Pour ce faire, l'invention propose une installation selon la revendicaton 1.

Typiquement, pour les installations de traitement de mélange gazeux, en particulier d'air où les matériaux particulaires sont des adsorbants, le rapport sus-mentionné est supérieur à 10.

La présente invention a également pour objet de proposer des procédés perfectionnés de chargement in situ de telles masses de matériaux particulaires ou granulaires dans de telles installations ne nécessitant pas d'intervention humaine dans le récipient et permettant de garantir, y compris pour des lits "minces" et multiples, une fiabilité des lits convenant à des installations à hautes performances.

Pour ce faire, l'invention propose un procédé selon la revendication 4.

On a déjà proposé dans des réacteurs catalytiques à circulation de fluide verticale de réaliser par des dépôts successifs de matériaux des couches verticales adjacentes différenciées, mais de façon manuelle et sans contrôle, autre que visuel, de la hauteur des couches, en imposant la présence d'opérateurs dans le récipient pendant toute l'opération de remplissage.

D'autres caractéristiques et avantages de la présente invention ressortiront de la description suivantes de modes de réalisation donnés à titre illustratif mais nullement limitatif, faite en relation avec les dessins annexés, sur lesquels :
- la figure 1 est une vue schématique en coupe verticale d'une installation de traitement selon l'invention en cours de chargement suivant un mode de réalisation de l'invention ;
- la figure 2 est une vue schématique en perspective du dispositif déverseur double de la figure 1 ;
- les figures 3 et 4 sont des vues analogues à la figure 1, montrant des modes de réalisation qui ne font pas partie de l'invention ;
- la figure 5 est une vue schématique en plan d'une autre variante de réalisation de l'invention ;
- la figure 6 est une vue schématique en coupe verticale d'une installation selon la figure 5 ;
- la figure 7 est une vue schématique en coupe verticale d'une autre variante de réalisation de l'invention ;
- la figure 8 est une vue paralléle, analogue à la figure 7, montrant une variante de cette dernière ; et
- la figure 9 est une vue schématique en coupe verticale d'encore une autre variante de l'invention.

Dans la description qui va suivre et sur les dessins, les éléments identiques ou analogues portent les mêmes chiffres de référence éventuellement indicés.

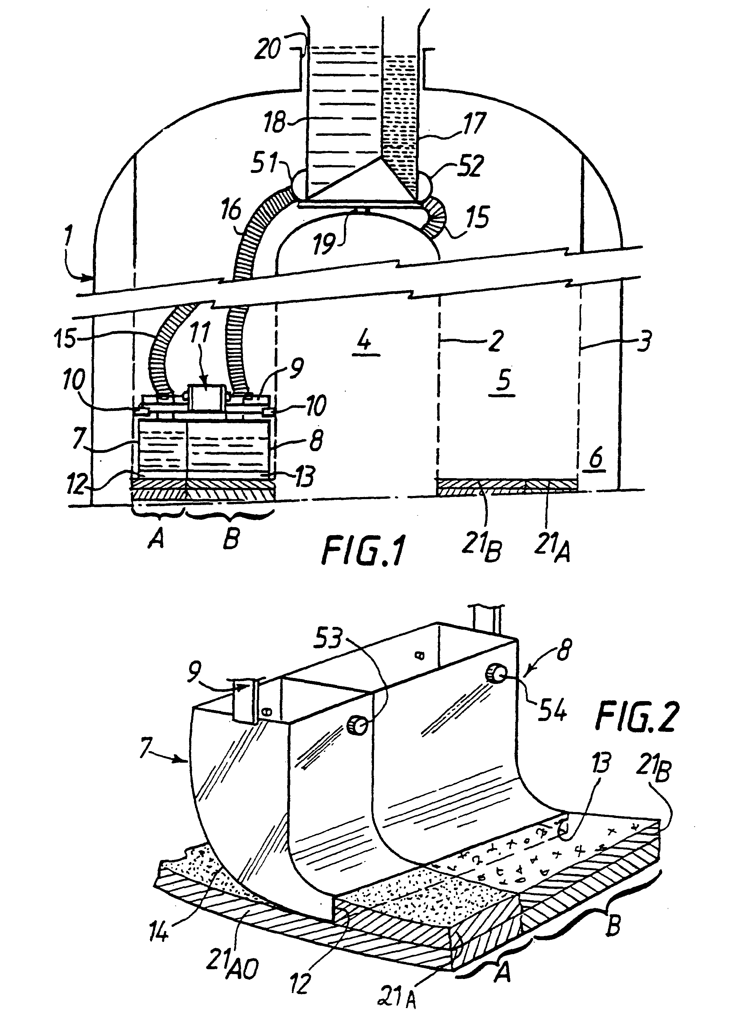

Sur la figure 1, on a représenté un récipient 1 d'une installation d'épuration par adsorption du type décrit dans le document EP-A-0.118.349 sus-mentionné, définissant un volume interne fermé d'axe vertical divisé intérieurement par une grille ou paroi perforée tubulaire centrale 2 et une grille ou paroi perforée tubulaire périphérique 3 concentriques en un volume central 4, un volume annulaire intermédiaire 5 et un volume annulaire périphérique 6 concentriques, le volume annulaire intermédiaire 5 étant rempli d'au moins une, en l'occurrence deux masses d'adsorbants A, B, traversées successivement par les gaz s'écoulant radialement entre les volumes 4 et 6 et, selon l'invention, dépourvu de grille intermédiaire. Pour l'épuration de l'air avant sa distillation ou pour la séparation de l'air par les techniques dites d'adsorption par variation de pression (PSA ou VSA), les adsorbants A et B sont généralement constitués de matériaux particulaires différenciés par leur composition et'ou leur granulométrie, typiquement de particules d'alumine et/ou de zéolithe, respectivement.

Dans le mode de réalisation représenté sur la figure 1, un appareil pour la mise en oeuvre des masses d'adsorbants A et B selon un procédé de la présente invention comprend deux dispositifs épandeurs accolés 7 et 8 de largeur hors tout inférieure à la largeur radiale du volume intermédiaire 5 et solidaires d'un bâti 9 comportant des moyens d'entraînement, par exemple des galets 10 prenant appui radialement sur les parois des grilles 2 et 3 et entraînés en rotation par un moteur 11 porté par le bâti. Chaque dispositif épandeur 7, 8, comporte une partie principale formant réserve de matériau particulaire se prolongeant vers le bas et vers l'arrière en une extrémité postérieure amincie se terminant par une bouche de distribution 12, 13, respectivement, la face antéro-inférieure de chaque dispositif 7, 8, présentant par exemple un profil en forme de sabot arrondi 14 se prolongeant, vers l'arrière, par une face horizontale de supportage se terminant au droit de la bouche de déversement 12, 13. Dans le mode de réalisation représenté, les parties principales des dispositifs épandeurs 7 et 8 sont reliées, par des conduites flexibles ou télescopiques 15 et 16, respectivement, à des réservoirs 17 et 18 de matériaux particulaires supportés à rotation, en 19, sur l'extrémité supérieure, non perforée, de la grille centrale 2. Les réservoirs 17 et 18 ainsi que les dispositifs épandeurs 7 et 8 sont dimensionnés de façon à pouvoir passer au travers d'une ouverture d'accès 20 formée, avantageusement axialement, dans l'extrémité supérieure de l'enveloppe du récipient 1, de façon à être extrait après remplissage du volume intermédiaire 5.

Comme on le voit bien sur la figure 2, chaque dispositif épandeur 7, 8, dépose derrière lui, lorsqu'il est déplacé dans la direction opposée aux bouches 12, 13, un ruban continu 21A, 21B de matériau particulaire ayant une section correspondant à celle de la bouche de dépose 12, 13, et donc d'épaisseur constante. Ainsi, en faisant tourner les dispositifs épandeurs 7 et 8 dans la chambre intermédiaire 5, ils déposent, à chaque révolution, une strate de deux rubans adjacents 21A, 21 B de même épaisseur occupant la totalité de la largeur radiale du volume intermédiaire 5. A chaque nouvelle révolution, les dispositifs épandeurs 7 et 8, prenant appui sur la strate antérieurement déposée et en glissant sur cette dernière, déposent progressivement une nouvelle strate, jusqu'à atteindre le haut du volume intermédiaire 5, après quoi les dispositifs épandeurs et les réservoirs 17 et 18 sont retirés et des moyens de blocage et/ou d'étanchéité sont mis en place, dans le haut du volume intermédiaire 5, pour éviter, en utilisation, des phénomènes locaux de bipasse du fluide ou de fluidisation des masses A et B.

Comme on le voit également sur la figure 2, le procédé selon l'invention permet de mettre en place côte à côte au moins deux lits d'adsorbants différenciés, de matériaux différents ou d'un même matériau présentant des granulométries différentes, sans devoir aménager, selon l'objet de l'invention, de grille de séparation et de contention entre les masses de matériaux particulaires. En effet, l'étalement concomittant, simultané dans ce mode de réalisation, des rubans 21A,21 B, d'épaisseur contrôlée constante, dans la pratique entre 1 et 20 cm, évite les problèmes de talutage sur les bords et limite, même avec des matériaux particulaires très fluides, les problèmes de mélange entre deux rubans adjacents, cette zone de mélange étant de l'ordre de grandeur du talus, c'est-à-dire de l'ordre de trois fois l'épaisseur du ruban étalé si l'épandage est séquentiel, ou une valeur notablement inférieure si l'épandage est, comme dans ce mode de réalisation préféré, simultané.

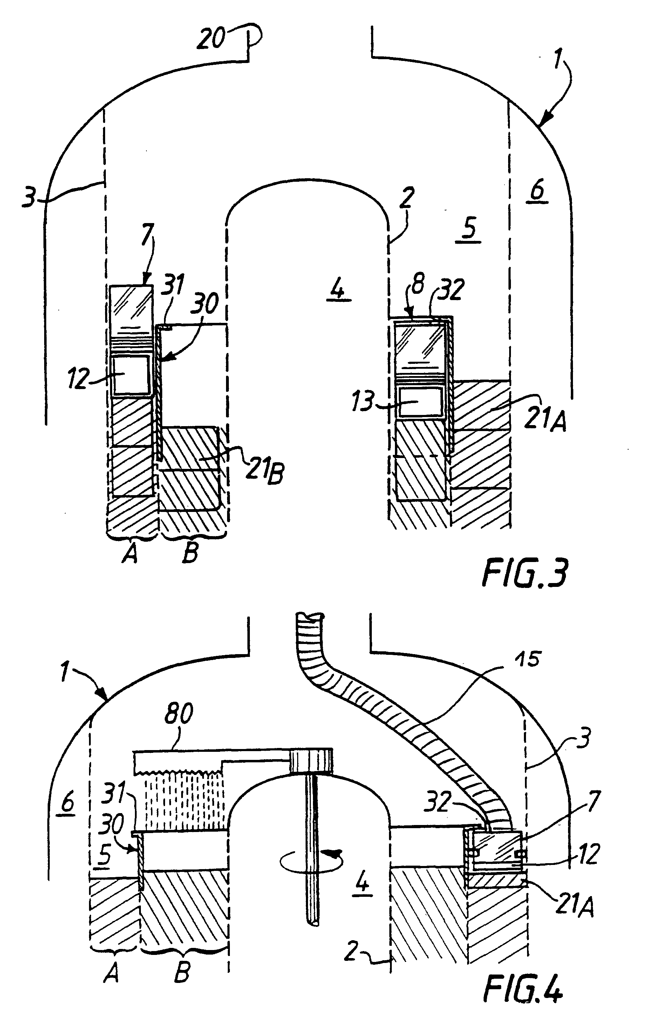

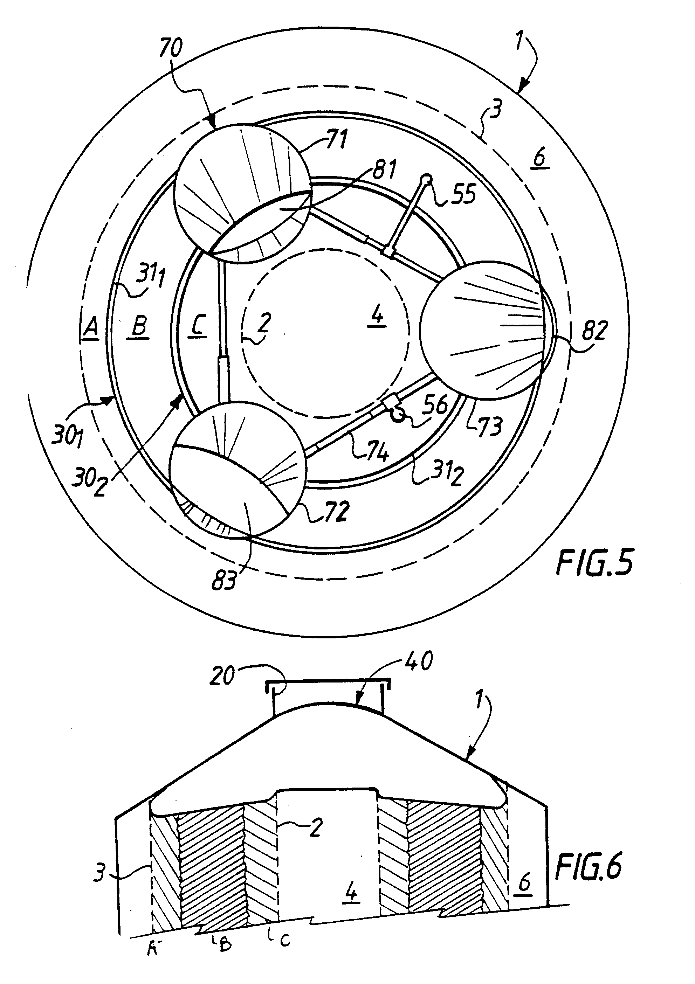

On a représenté sur les figures 3 et 4 des modes de remplissage ne faisant pas partie de l'invention et permettant de s'affranchir de ces conditions de dépose simultanée ou quasi-simultanée et mettant en oeuvre un coffrage glissant cylindrique 30 de faible hauteur, logeable donc dans le haut du récipient en fin de phase de remplissage et se déplaçant verticalement au fur et à mesure de la dépose des strates de matériau particulaire, conférant ainsi, par élimination du talus, la même rigueur d'interface à un épandage ou une dépose séquentiel(le) qu'à un épandage simultané, tel que précédemment décrit. On retrouve sur la figure 3 les deux dispositifs épandeurs 7 et 8 de la figure 1, ici dissociés et indépendants, comme l'autorise le coffrage glissant 30, mais synchronisés dans leur actionnement. Le coffrage glissant 30 se présente sous la forme d'un tronçon de tube disposé concentriquement dans l'espace 5 et ayant une extension axiale supérieure à 1,5 fois la hauteur axiale de la bouche la moins haute (13) des dispositifs épandeurs 7, 8, entre lesquels il s'étend. Avantageusement, l'extrémité supérieure du coffrage 30 comporte une collerette radiale 31 portant en appui sur un organe de roulement 32 au sommet d'un des dispositifs épandeurs de façon à se déplacer axialement simultanément avec ce dernier, l'autre dispositif épandeur étant actionné en rotation en synchronisme avec le premier.

Le mode de réalisation de la figure 4 se distingue de celui de la figure 3 par le fait que le remplissage d'une des masses de matériau particulaire, en l'occurrence la masse interne B, est effectué ici par déversement en pluie, comme l'autorise le coffrage glissant 30, au moyen d'une rampe 80 se déplaçant en rotation en synchronisme avec le dépôt, par un dispositif épandeur 7 tel que décrit plus haut, de strates d'épaisseur constante selon les procédés des figures 1 et 3.

On a représenté sur la figure 5 un dispositif à deux coffrages glissants concentriques pour le chargement de trois masses de matériaux particulaires concentriques dans le volume interne annulaire 5 défini entre les grilles intérieure 2 et extérieure 3. Comme on le voit sur la figure 5, le dispositif comporte un équipage tournant 70, déplaçable axialement en étant avantageusement suspendu au haut du récipient 1, de trois trémies déverseuses 71, 72, 73, reliées par des bras transversaux 74 et pourvues d'organes de roulement ou d'appui à faible friction coopérant avec les collerettes radiales 31₁ et 31₂ de deux coffrages glissants tubulaires concentriques 30₁, 30₂, séparant les volumes des trois masses d'adsorbant concentriques A, B, C. Les trémies doseuses 71-73, alimentées par des réserves tournant avec l'équipage comme dans le mode de réalisation de la figure 1, comportent des ouvertures de déversement inférieures 81, 82, 83, débouchant respectivement dans les espaces annulaires entre le coffrage intérieur 31₂ et la grille intérieure 4, entre les coffrages 31₂ et 31₁, et entre le coffrage extérieur 31₁ et la grille extérieure 3. Après remplissage de la zone entre les grilles 2 et 3, l'équipage 70 est démonté et extrait du récipient 1 par l'ouverture 20, puis le volume supérieur au-dessus des masses A, B, C est au moins partiellement occupé par un ou des dispositifs de contention des parties supérieures des masses A-C, par exemple par une baudruche 40 connectable à une source de gaz sous pression.

Comme on le comprendra de ce qui précède, le problème technique principal réside dans la réalisation d'au moins deux masses homogènes de matériaux particulaires dans le volume confiné de l'adsorbeur, plus particulièrement quand les masses sont annulaires et concentriques : il faut en effet maintenir les niveaux de matériaux particulaires dans le volume de réception ou dans les dispositifs d'étalement dans des limites étroites (la hauteur des couches successives dans les variantes selon les figures 1 et 2, la hauteur du coffrage glissant dans les variantes selon les figures 3 à 5, la ( hauteur de la trémie du dispositif de répandage). Ces hauteurs sont en effet obligatoirement limitées du fait de la nécessité de pouvoir sortir les dispositifs déverseurs ou étaleurs du récipient en fin de leur remplissage ou de les abandonner dans un volume dans le haut du récipient sans qu'ils nuisent au bon fonctionnement de l'instal lation.

Il est en effet délicat, en dehors des installations utilisant des récipients de faibles dimensions qui peuvent être assemblés en usine, d'effectuer le remplissage d'un récipient ouvert vers le haut, ce qui permettrait l'utilisation d'au moins un coffrage glissant ayant une hauteur supérieure à un tiers de celle des grilles 2 et 3, que l'on peut enlever après remplissage complet du récipient dont le fond supérieur serait ensuite soudé ou assemblé par une bride sur la virole périphérique. Selon un aspect de l'invention, le débit de chaque matériau particulaire mis en place dans le récipient doit être adapté à tout instant de manière à maintenir des niveaux homogènes. A cette fin, les dispositifs déverseurslrépandeurs peuvent comporter un moyen de contrôle de débit du matériau particulaire, typiquement en amont du dispositif épandeur, par exemple des dispositifs de soutirage à vannes ou à ergots, comme représenté en 51 et 52 sur la figure 1, des moyens de mesure de niveau du matériau particulaire dans les trémies d'épandage, par exemple des cellules photo-électriques comme représenté en 53 et 54 sur la figure 2, ou des dispositifs fonctionnant par réflexion, notamment à ultrasons, comme représenté en 55 et 56 sur la figure 5.

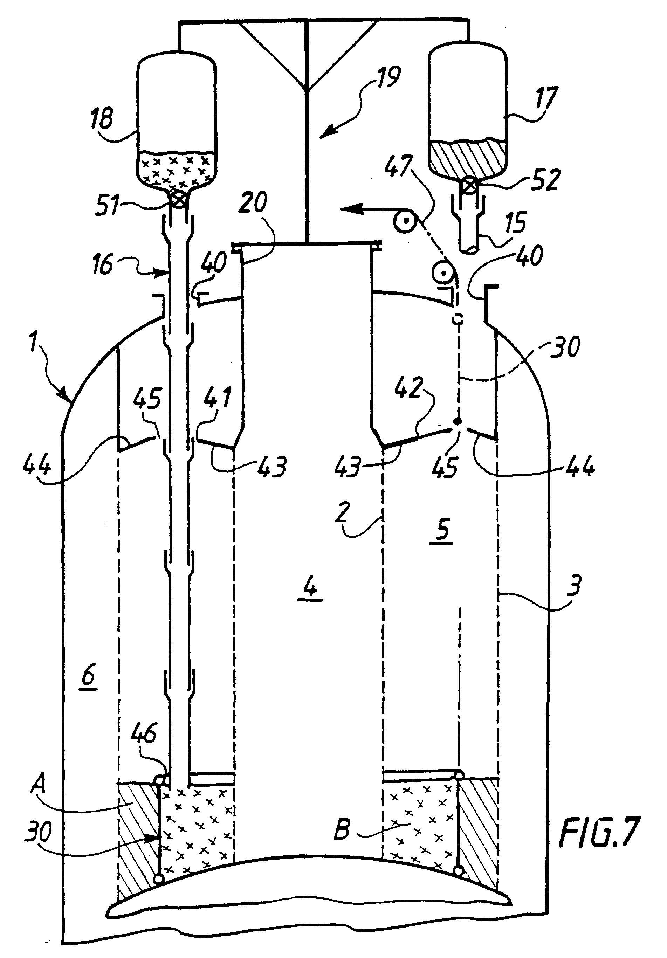

Sur la figure 7, on a représenté une autre variante de réalisation de lits annulaires concentriques dans une installation à lits concentriques analogue aux précédentes. On retrouve ici les réservoirs 17 et 18 de matériaux particulaires et leur support rotatif 19, ici du type à potence, agencés, ici, à l'extérieur du récipient 1, et débitant chacun par une conduite télescopique ou flexible 15, 16, respectivement, dans les espaces annulaires adjacents délimités, dans le volume annulaire intermédiaire 5 entre les parois perforées 2 et 3, par une virole formant coffrage glissant 30.

Comme on le voit sur la partie gauche de la figure 7, l'extrémité inférieure de chaque conduit 16, respectivement, 15, débouche légèrement au-dessous de l'extrémité supérieure du coffrage 30 en étant solidarisée à cette dernière, de façon démontable, en 46. En déversant ainsi une quantité de matériau particulaire supérieure au volume libre formé par le coffrage glissant, ce volume se remplit jusqu'à ce que l'extrémité du conduit 15, 16 affleure la masse de matériau particulaire, ce qui interrompt ainsi le remplissage dudit volume. On interrompt alors le déversement par les vannes 51, 52 et l'on remonte, par exemple par des câbles 47 passant par les passages 40 et les ouvertures 41, 42, la virole de coffrage 30 d'une hauteur inférieure à la hauteur de la virole elle-même, c'est-à-dire avec son extrémité inférieure demeurant noyée dans les couches de matériaux particulaires précédemment déposées, les extrémités inférieures des conduits 15 et 16 accompagnant ce déplacement et restant en position par rapport à la virole 30 pour une nouvelle étape de chargement.

Dans le mode de réalisation de la figure 7, les conduits 15 et 16 s'etendent au travers d'orifices de remplissage 40 formés dans la paroi supérieure du récipient 1 à l'aplomb de l'espace annulaire 5 et angulairement répartis autour de l'axe du récipient 1, et d'ouvertures 41, 42 formées dans des plaques déflectrices 43 et 44 convergeant typiquement en V l'une vers l'autre en laissant à leur sommet un passage annulaire 45 et délimitant supérieurement la partie active des lits annulaires A et B en guidant les flux de fluide, dans cette zone, au travers de ces derniers. Lorsqu'elle arrive, en fin de remontée, au niveau des plaques déflectrices 43 et 44, la virole 30 est hissée, dans l'exemple représenté, au travers de l'espace annulaire 45 entre les extrémités en regard de ces plaques déflectrices et reste logée à demeure dans l'extrémité supérieure du récipient 1 dans la configuration représentée en pointillés en haut de la partie droite de la figure 7. Les ouvertures 41 et 42 dans les plaques 43 et 44 sont obturées, puis des réserves de matériaux particulaires sont versées par les conduits raccourcis 15 et 16 au-dessus des plaques déflectrices 44, 43 en demeurant séparées par la virole 30 immobilisée dans sa position haute. Le remplissage est complété en déversant les matériaux particulaires directement par les orifices 40 de part et d'autre de la virole 30, après quoi les conduits 15 et 16, les réservoirs 17 et 18, et leur support 19 sont enlevés, les passages 40 obturés et le récipient placé en condition opérationnelle.

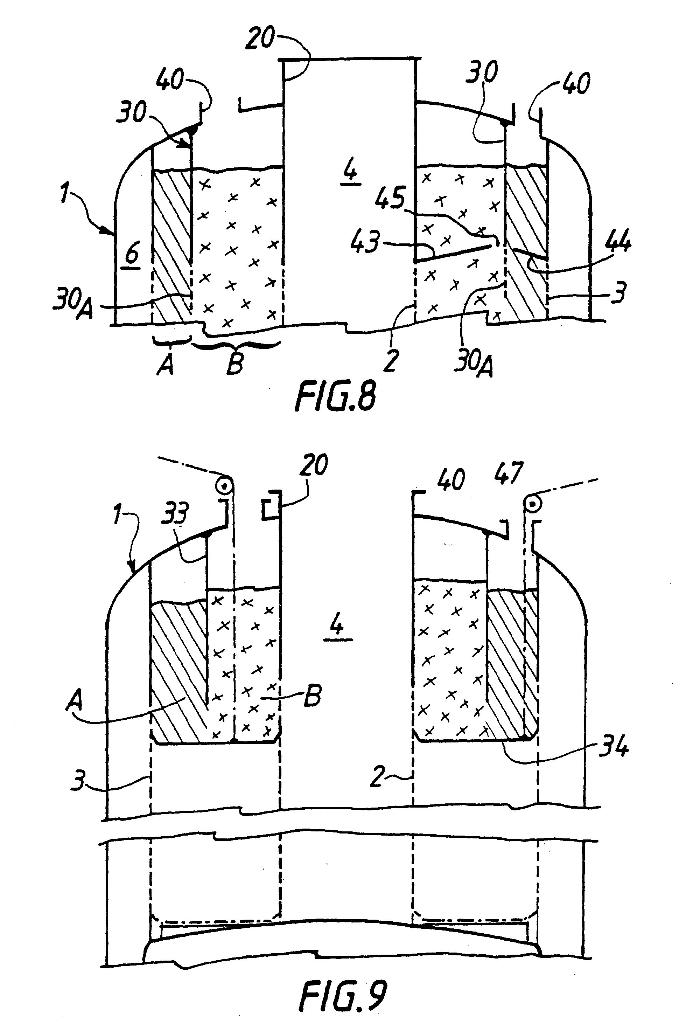

Dans le mode de réalisation de la figure 8, qui représente un récipient en configuration complètement remplie, le coffrage glissant 30 comporte une partie inférieure 30A "transparente" aux gaz, typiquement en sandwiches de grillages, qui ne perturbe pas la réalisation d'une zone d'interface franche entre deux lits contigus. Dans ce cas, comme représenté sur la partie droite de la figure 8, ladite partie inférieure grillagée peut rester noyée dans la zone opérationnelle des lits A et B, au-dessous des déflecteurs 43, 44. Eventuellement, comme représenté sur la partie gauche de la figure 7, les déflecteurs peuvent être supprimés, la partie "pleine" supérieure du coffrage 30, également noyée dans les masses A et B formant obstacle et évitant les passages de courts-circuits de fluide par le haut des lits.

Sur la figure 9, qui représente un récipient en début de remplissage, on a illustré un autre mode de réalisation de couches verticales contiguës de matériaux différenciés sans grille de séparation selon l'invention. Ici les matériaux sont déversés, en synchronisme, directement dans les chambres annulaires au-dessous des orifices de remplissage 40. Ces chambres sont délimitées initialement par une virole 33 de hauteur déterminée, dont le bord supérieur est fixé au toit du récipient et, en permanence, à leur extrémité inférieure, par une paroi de fond annulaire 34 coulissant de façon étanche le long des grilles de contention interne 2 et externe 3, en étant retenue, lors de sa descente, par des câbles 47. La paroi de fond 34 est descendue progressivement jusqu'à venir reposer sur la structure de fond du récipient 1, comme représenté en pointillés sur la partie inférieure de la figure 9. On comprendra que, dans ce mode de réalisation, les strates de lits adjacents formées de part et d'autre de la virole 33 "descendent" progressivement avec le fond 34 en étant maintenues contiguës et guidées par les grilles 2 et 3. Lorsque le récipient est complètement rempli, la virole 33, qui s'étend jusqu'au niveau supérieur des zones "passantes" des grilles de contention 2 et 3, joue le rôle de chicane anti-bipasse, à l'instar du coffrage 30 des modes de réalisation des figures 7 et 8.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Installation de traitement d'au moins un fluide gazeux, comprenant au moins un récipient (1) ayant, en configuration d'utilisation, une direction principale suivant un axe sensiblement vertical et définissant au moins une portion de trajet de fluide non verticale au travers d'au moins deux masses annulaire adjacentes concentriques (A, B, C) de matériaux particulaires ou granulaires différenciés disposées, entre deux grilles concentriques, dans le récipient, au moins deux masses adjacentes étant en contact direct l'une avec l'autre avec entre elles une zone d'interface sensiblement verticale, sans grille intermédiaire, chaque masse ayant une dimension transversale maximale supérieure à six fois son épaisseur horizontale.

2. Installation selon la revendication 1, **caractérisée en ce que** le matériau particulaire d'au moins une des masses est un adsorbant pour au moins un constituant du fluide.

3. Utilisation d'une installation selon l'une des revendications 1 et 2 pour le traitement d'un flux d'air.

4. Procédé de chargement d'au moins deux masses annulaires adjacentes de matériaux particulaires ou granulaires dans un récipient d'une installation selon l'une des revendications 1 à 3, comprenant les étapes :
a) de déposer simultanément entre les deux grilles, dans le récipient en configuration d'utilisation au moyen d'au moins un dispositif épandeur ou déverseur, une strate ayant une hauteur déterminée d'au moins deux couches adjacentes de matériaux, et
b) de répéter plusieurs fois l'étape a) pour constituer entre les deux grilles un empilage de couches adjacentes ayant sensiblement la même hauteur.

5. Procédé selon la revendication 4, **caractérisé en ce que** la hauteur déterminée est fixée par les dimensions verticales du dispositif déverseur.

6. Procédé selon la revendication 5, **caractérisé en ce que** le dispositif déverseur comprend au moins un coffrage glissant (30) à génératrices verticales et au moins deux organes (15, 16; 71, 72, 73) de déversement de matériaux débouchant de part et d'autre du coffrage au voisinage de l'extrémité supérieure de ce dernier et déplaçables verticalement avec lui.

7. Procédé selon la revendication 6, **caractérisé en ce que** chaque dispositif déverseur est constitué d'au moins deux conduites (15; 16) débouchant par une extrémité inférieure disposée au-dessous du bord supérieure du coffrage glissant (30).

## Patentansprüche

1. Vorrichtung zur Behandlung von mindestens einem gasförmigen Fluid, die mindestens einen Behälter (1) umfasst, der in der Verwendungskonfiguration eine Hauptrichtung nach einer im Wesentlichen vertikalen Achse hat und mindestens einen nicht vertikalen Fluidverlaufabschnitt durch mindestens zwei benachbarte konzentrische ringförmige Massen (A, B, C) partikelförmiger oder körniger unterschiedlicher Stoffe, die zwischen zwei konzentrischen Gittern in dem Behälter angeordnet sind, definiert, wobei mindestens zwei benachbarte Massen miteinander in direktem Kontakt sind und zwischen ihnen eine im Wesentlichen vertikale Schnittstellenzone ohne Zwischengitter besteht, wobei jede Masse ein maximales Quermaß hat, das sechs Mal größer ist als ihre horizontale Stärke.

2. Vorrichtung nach Anspruch 1, **dadurch gekennzeichnet, dass** der partikelförmige Stoff mindestens einer der Massen ein Adsorptionsmittel für mindestens einen der Bestandteile des Fluids ist.

3. Einsatz einer Vorrichtung nach einem der Ansprüche 1 und 2 zur Behandlung eines Luftstroms.

4. Verfahren zum Laden von mindestens zwei benachbarten ringförmigen Massen partikelförmiger oder körniger Stoffe in einem Behälter einer Vorrichtung nach einem der Ansprüche 1 bis 3, umfassend die folgenden Schritte:
a) mittels mindestens einer Verteil- oder Schüttvorrichtung gleichzeitiges Ablegen zwischen den zwei Gittern, in dem Behälter in Verwendungskonfiguration einer Lage mit einer bestimmten Höhe aus mindestens zwei benachbarten Stoffschichten und
b) mehrmaliges Wiederholen des Schritts a) zum Bilden einer Stapelung benachbarter Schichten mit im Wesentlichen der gleichen Höhe zwischen den zwei Gittern.

5. Verfahren nach Anspruch 4, **dadurch gekennzeichnet, dass** die bestimmte Höhe von den vertikalen Maßen der Schüttvorrichtung festgelegt wird.

6. Verfahren nach Anspruch 5, **dadurch gekennzeichnet, dass** die Schüttvorrichtung mindestens eine Gleitschalung (30) mit vertikalen Mantellinien umfasst und mindestens zwei Organe (15, 16; 71, 72, 73) zum Schütten der Stoffe, die zu beiden Seiten der Schalung in der Nähe des oberen Endes Letzterer münden und mit ihr vertikal verfahrbar sind.

7. Verfahren nach Anspruch 6, **dadurch gekennzeichnet, dass** jede Schüttvorrichtung aus mindestens zwei Leitungen (15; 16) besteht, die über ein unteres Ende münden, das unter dem oberen Rand der Gleitschalung (30) angeordnet ist.

## Claims

1. Installation for treating at least one gaseous fluid, comprising at least one container (1) having, in the configuration in which it is used, a principal direction along an approximately vertical axis and defining at least one non-vertical fluid path portion through at least two concentric adjacent annular masses (A, B, C) of different particulate or granular materials placed, between two concentric grids, in the container, at least two adjacent masses being in direct contact with each other, with a substantially vertical interface region between them, with no intermediate grid, each mass having a maximum transverse dimension of greater than six times its horizontal thickness.

2. Installation according to Claim 1, **characterized in that** the particulate material of at least one of the masses is an absorbent for at least one constituent of the fluid.

3. Use of an installation according to either of Claims 1 and 2 for the treatment of a stream of air.

4. Method of loading a container of an installation according to one of Claims 1 to 3 with at least two adjacent annular masses of particulate or granular materials, which comprises the steps:
a) of depositing, simultaneously between the two grids, by means of at least one spreader or pourer device, a stratum of defined height consisting of at least two adjacent layers of materials in the container in the configuration in which it is used; and
b) of repeating step a) several times in order to constitute, between the two grids, a stack of adjacent layers having substantially the same height.

5. Method according to Claim 4, **characterized in that** the defined height is set by the vertical dimensions of the pourer device.

6. Method according to Claim 5, **characterized in that** the pourer device comprises at least one sliding form (30) having vertical generatrices and at least two material-pouring members (15, 16; 71, 72, 73) that emerge on either side of the form near the upper end of the latter and can move vertically with it.

7. Method according to Claim 6, **characterized in that** each pourer device consists of at least two ducts (15; 16) emerging via a lower end placed beneath the upper edge of the sliding form (30).
